# EUROPEAN PATENT APPLICATION

(11) **EP 3 513 934 A1**
(43) Date of publication of application: **24.07.2019**
(21) Application number: 19150679.9
(22) Date of filing: 08.01.2019
(51) Int. Cl.: B27M 1/08, B23B 39/00, B23Q 3/16, B23Q 39/02

(54) **MACHINE TOOL FOR MACHINING PANELS**

(30) Priority: 17.01.2018 IT 201800001136
(71) Applicant: SCM Group S.p.A., 47921 Rimini (RN) (IT)
(72) Inventor: BERTOLUCCIOLI, Alessandro, 47921 Rimini (IT)
(74) Representative: Tiburzi, Andrea

(57) **Abstract**

Described is a machine tool (1) for machining panels (P) comprising: a working plane (3) configured for receiving at least one panel (P); locking means (9') for locking said at least one panel (P) on said working plane (3); a movable operating unit (22), arranged on said working plane (3) and configured for performing, in use, at least one processing from above on at least one panel (P) arranged on said working plane (3); and means (6, 7, 8) designed to perform, from below, at least one operation relative to at least one panel (P) arranged on said working plane (3), said means (6, 7, 8) being movable and connected to said working plane (3).

## Description

This invention relates to a machine tool for machining panels.

More in detail, the invention relates to a workstation for machining panels made of wood or other material, fitted with a working plane equipped with at least one operating member for performing at least one machining on said panels, and/or at least one constraining element for making a constraint, that is, a contact, for said panels.

The above-mentioned operating member may comprise, for example, a drilling tip and/or a milling cutter.

The description below relates to the machining of wooden panels, but it is quite apparent how the same should not be considered limited to this specific use, as the machine tool according to the invention can also be used for machining panels made of other material.

The machine tools for machining panels currently on the market are normally equipped with a working plane consisting of transversal bars on which suction or clamping gripper members are enabled to slide for immobilising, that is to say, locking the panels to be machined, respectively, by the relative lower face or at the lateral edges.

The gripping members therefore enter into action before execution of the machining planned on the panels.

The prior art machine tools are also equipped with one or more operating heads which are able to move according to more than one direction above the panels to be machined and are designed for the machining of the panels kept stationary by the gripping members.

In light of the above, the aim of the invention is therefore to provide a machine tool for machining panels which has a high productivity level.

Another aim of the invention is to provide a machine tool for machining panels which is multi-purpose and has a high flexibility of use.

A further aim of the invention is to provide a machine tool for machining panels which has a simple structure.

The specific object of the invention is therefore a machine tool for machining panels comprising: a working plane configured for receiving at least one panel; locking means for locking said at least one panel on said working plane; a movable operating unit, arranged on said working plane and configured for performing, in use, at least one processing from above on at least one panel (P) arranged on said working plane; and means designed to perform, from below, at least one operation relative to at least one panel (P) arranged on said working plane, said means being movable and connected to said working plane.

Advantageously, according to the invention, said working plane can extend according to a first preferential axis and can comprise a plurality of bars which is directed parallel to a second axis substantially orthogonal to said first preferential axis and said means can be connected to said plurality of bars in a movable manner according to said second axis.

Conveniently, according to the invention, said means can comprise operating means for performing, in use, one processing from below on at least one panel arranged on said working plane, and/or constraining means for providing, in use, from below, at least one constraint to at least one panel arranged on said working plane.

Further, according to the invention, said operating means can comprise at least one operating assembly comprising a support configured for coupling, in a sliding manner, to a bar of said plurality of bars and an operating device for performing at least one machining on said at least one panel, said operating device being side coupled to said support.

Again, according to the invention, said operating means can comprise at least one drilling tip for performing at least one drilling on said at least one panel and/or at least one milling cutter for performing at least one milling on said at least one panel.

Conveniently, according to the invention, said operating means can comprise actuating means per moving said at least one drilling tip and/or said at least one milling cutter according to a third axis perpendicular to said first preferential axis and to said second axis.

Advantageously, according to the invention, said constraining means can comprise at least one constraining assembly comprising a support configured for coupling, in a sliding manner, to a bar of said plurality of bars and a constraining device provided with a matching element which is substantially movable parallel to said third axis between a lowered position, wherein said matching element is arranged, in use, under said at least one panel arranged on said working plane, and a lifted position, wherein said matching element is able to contact, in use, said at least one panel arranged on said working plane.

Preferably, according to the invention, said constraining device is side coupled to said support.

Again, according to the invention, said means can comprise at least one reading device, preferably of the RFID type and/or at least one device for measuring the thickness of said at least one panel arranged on said working plane, and/or at least one printing device, and/or at least one labelling device, and/or at least one marking device, and/or at least one suction device, and/or at least one blowing device.

Further, according to the invention, said locking means can be connected to said means.

Again, according to the invention, said locking means can be connected to a top portion of said means.

Further, according to the invention, said machine tool can comprise a bridge arranged above said working plane and movable according to said first preferential axis, said operating unit being movable according to said third axis and being connected to said bridge in a movable fashion according to said second axis.

The invention is now described, by way of example and without limiting the scope of the invention, with reference to the accompanying drawings which illustrate preferred embodiments of it, in which:

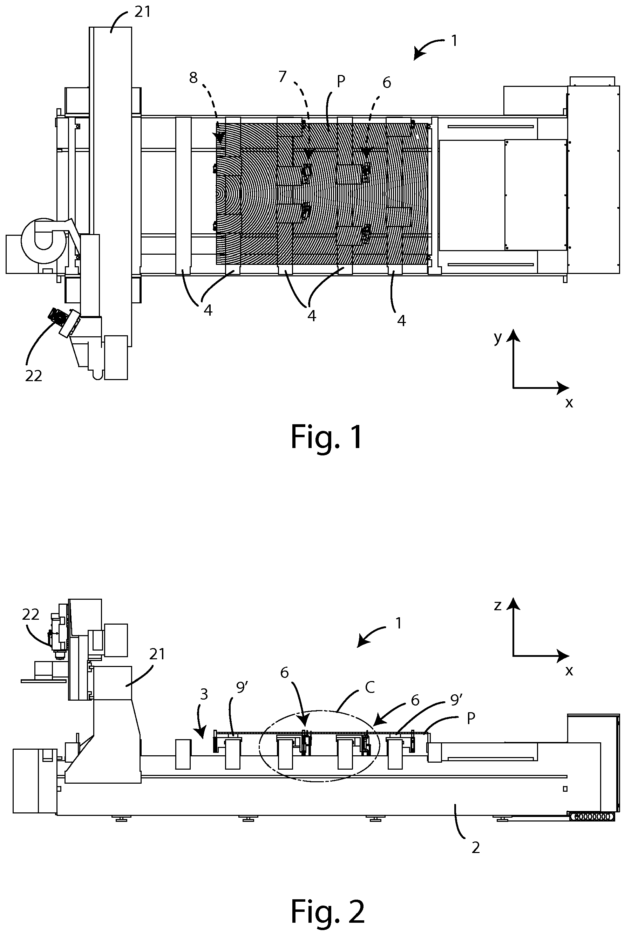

Figure 1 is a top plan view of a machine tool with a working plane equipped with at least one operating or constraining member;
Figure 2 is a side view of the machine shown in Figure 1;

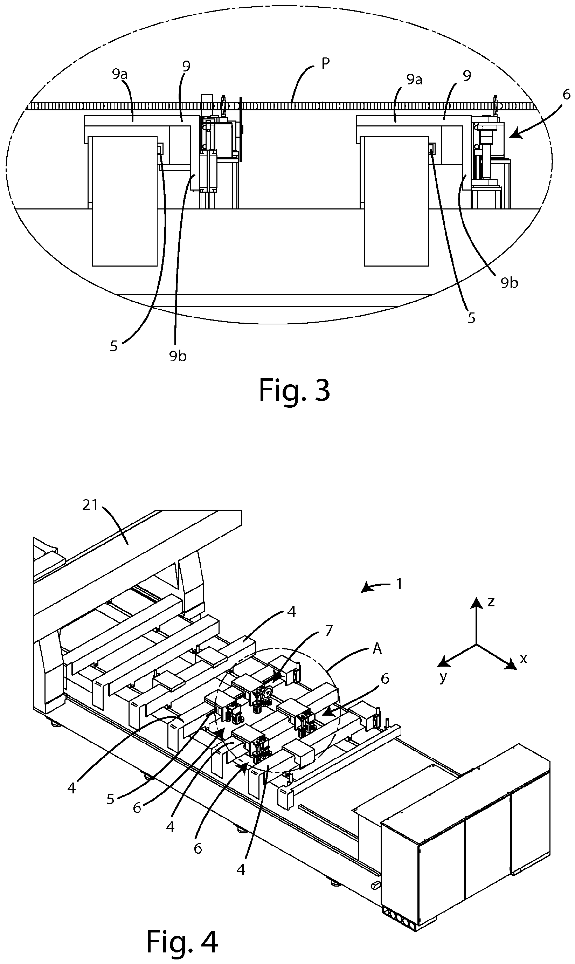

Figure 3 is a detailed view of detail "C" shown in Figure 2;
Figure 4 is a partial perspective view of the machine shown in Figures 1 and 2;

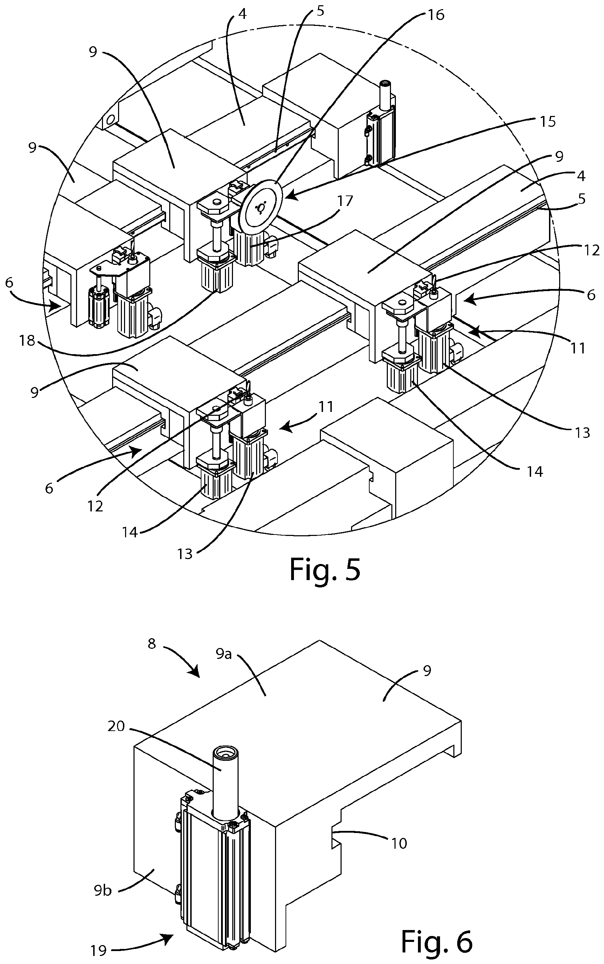

Figure 5 is a detailed view of detail "A" shown in Figure 4; and
Figure 6 is a detailed view of a components of the machine of Figures 1, 2 and 4.

The similar parts will be indicated in the various drawings with the same numerical references.

With reference to the accompanying drawings, the numeral 1 denotes a work station, that is to say, a machine tool for machining wooden panels.

The machine tool 1 is formed by a base 2 on which is provided a working plane 3 which extends along a preferential direction parallel to an axis X.

The working plane 3 consists of a plurality di transversal bars 4 parallel to each other, directed according to an axis Y and movable, manually or automatically, along the axis X.

On each transversal bar 4 there is, laterally, a linear, oblong, protruding element 5.

One or more drilling units 6 and/or one or more milling units 7 and/or one or more constraining units 8 can be mounted on the transversal bars 4 slidably along the axis Y.

On the transversal bars 4 there also can be, if necessary, one or more motor-driven carriages for driving the above-mentioned units 6, 7, 8 along the respective transversal bars 4.

Each drilling unit 6 comprises a support 9 with a substantially L-shaped profile, that is, formed by an upper portion 9a, which is substantially C-shaped, arranged horizontally and a lateral portion 9b oriented vertically, on the inner side of which is made a linear groove 10 configured in such a way as to be able to receive the protruding oblong element 5 of the respective transversal bar 4, in this way forming a linear guide between the latter and the drilling unit 6.

According to a variant of the invention, both the protruding oblong elements 5 and the respective linear grooves 10 need not be provided; in this case, the function of linear guide for the units 6, 7, 8 mentioned above is performed by the same transversal bars 4.

According to a further embodiment of the invention, not shown in the accompanying drawings, the above-mentioned protruding oblong element 5 with linear guide function can be replaced with a linear rack to allow the movement of the above-mentioned one or more drilling units 6 and/or one or more milling units 7 and/or one or more constraining units 8 along the transversal bars 4, by means of gear wheels mounted on said units 6, 7, 8 and actuated by motor means.

In the latter embodiment, the function of the linear guide for movement of the above-mentioned units 6, 7, 8 is performed by the same transversal bars 4.

On the top side of the upper portion 9a of the support 9 there is a sucker 9' for locking from below the panels P to be machined.

According to a variant of the invention not shown in the drawings, as a replacement or an addition to the above-mentioned suckers 9' there can be clamp members, which are removable, for griping laterally the workpieces to be machined.

The clamp members are particularly suitable for locking workpieces made of solid wood.

On the other hand, on the lateral portion 9b of the support 9 is mounted, on the opposite side to that on which is formed the linear groove 10, a drilling device 11 equipped with a drilling tip 12 directed vertically according to the axis Z and an electric motor 13 for the relative rotation.

The drilling device 11 also comprises an electric actuator 14, or a pneumatic actuator of the "on/off" type, for moving the above-mentioned drilling tip 12 vertically along the axis Z and, therefore, allowing the execution of holes on the lower side of the panels P.

The above-mentioned suckers 9' can be of the removable type or activatable selectively, in such a way as to be able to provide in the working plane 3 drilling units 6 with the suckers active, that is, operational, designed for the locking of the panels P to be machined arranged above them, and drilling units 6 without suckers, or with the suckers in a lowered position so as not to make contact with the panels P, and therefore freely movable beneath the panels P to allow the execution of the planned drilling operations.

The milling units 7 also each comprise a support 9 identical to that described above with regard to the drilling units 6.

Each milling unit 7 comprises, however, a milling device 15 instead of, and in the same position as, the drilling device 11.

The milling device 15 comprises a milling cutter 16 arranged vertically and an electric motor 17 for rotating the milling cutter 16 about an axis parallel to the axis X.

The milling device 15 also has an electric actuator 18, or a pneumatic actuator, for moving the milling cutter 16 vertically according to the axis Z and thereby allow the execution of the planned cuts on the overlying panels P.

Moreover, the milling units 7 can also comprise clamp members and/or suckers as described above with regard to the drilling units 6, for locking the workpieces to be machined.

The constraining units 8 also each comprise a support 9 completely identical to those provided in the drilling units 6 and in the milling units 7.

Unlike the drilling units 6 and the milling units 7, the constraining units 8 comprise, instead of an in the same position as the drilling devices 11 and the milling devices 15, a constraining device 19 equipped with a pin 20 selectively movable vertically according to the axis Z, in such a way that when it is positioned in the relative raised position it provides a lateral constraint to the panels P arranged on the working plane 3.

The constraining units 8 can also comprise clamp members and/or suckers as described above with regard to the drilling units 6, for locking the workpieces to be machined.

According to certain variants of the invention not shown in the accompanying drawings, instead of or in addition to the units 6, 7, 8, on the transversal bars 4 there can be, mounted in a movable fashion, one or more reading devices (for example, RFID type), and/or one or more devices for measuring the thickness of the panel P rested on the working plane 3, and/or one or more printing devices, and/or one or more labelling devices, and/or one or more marking devices, and/or one or more suction devices, and/or one or more blowing devices.

The machine tool 1 also comprises above the working plane 3 a bridge or gantry 21 movable along the axis X, on which is mounted an operating head 22 for the machining, from above, of the panels P loaded on the working plane 3.

More specifically, the operating head 22 is movable according to the axis Y and the axis Z and is configured in such a way as to be able to execute, from above, a plurality of different machining operations with the use of specific interchangeable tools.

By using the machine tool 1 described above it is therefore possible to simultaneously perform several machining operations, even of a different type, on the panels P loaded on the working plane 3.

This results, evidently, in a considerable flexibility and multi-purpose use of the machine tool 1, combined with a high level of productivity.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A machine tool (1) for machining panels (P), comprising:
a working plane (3) configured for receiving at least one panel (P);
locking means (9') for locking said at least one panel (P) on said working plane (3);
a movable operating unit (22), arranged on said working plane (3) and configured for performing, in use, at least one processing from above on at least one panel (P) arranged on said working plane (3); and
means (6, 7, 8) designed to perform, from below, at least one operation relative to at least one panel (P) arranged on said working plane (3), said means (6, 7, 8) being movable and connected to said working plane (3).

2. The machine tool (1) according to claim 1, **characterized in that** said working plane (3) extends according to a first preferential axis (X) and comprises a plurality of bars (4) which is directed parallel to a second axis (Y) substantially orthogonal to said first preferential axis (X) and **in that** said means (6, 7, 8) are connected to said plurality of bars (4) in a movable manner according to said second axis (Y).

3. The machine tool (1) according to claim 1 or 2, **characterized in that** said means comprise operating means (6, 7) for performing, in use, one processing from below on at least one panel (P) arranged on said working plane (3), and/or constraining means (8) for providing, in use, from below, at least one constraint to at least one panel (P) arranged on said working plane (3).

4. The machine tool (1) according to claim 2 or 3, **characterized in that** said operating means comprise at least one operating assembly (6, 7) comprising a support (9) configured for coupling, in a sliding manner, to a bar of said plurality of bars (4) and an operating device (11, 15) for performing at least one machining on said at least one panel (P), said operating device (11, 15) being side coupled to said support (9).

5. The machine tool (1) according to claim 3 or 4, **characterized in that** said operating means (6, 7) comprise at least one drilling tip (12) for performing at least one drilling on said at least one panel (P) and/or at least one milling cutter (16) for performing at least one milling on said at least one panel (P).

6. The machine tool (1) according to claim 5, **characterized in that** said operating means (6, 7) comprise actuating means (14, 18) per moving said at least one drilling tip (12) and/or said at least one milling cutter (16) according to a third axis (Z) perpendicular to said first preferential axis (X) and to said second axis (Y).

7. The machine tool (1) according to claim 2 or 3, **characterized in that** said constraining means comprise at least one constraining assembly (8) comprising a support (9) configured for coupling, in a sliding manner, to a bar of said plurality of bars (4) and a constraining device (19) provided with a matching element (20) which is substantially movable parallel to said third axis (Z) between a lowered position, wherein said matching element (20) is arranged, in use, under said at least one panel (P) arranged on said working plane (3), and a lifted position, wherein said matching element (20) is able to contact, in use, said at least one panel (P) arranged on said working plane (3).

8. The machine tool (1) according to claim 7, **characterized in that** said constraining device (19) is side coupled to said support (9).

9. The machine tool (1) according to claim 1 or 2, **characterized in that** said means comprise at least one reading device, preferably of the RFID type and/or at least one device for measuring the thickness of said at least one panel (P) arranged on said working plane (3), and/or at least one printing device, and/or at least one labelling device, and/or at least one marking device, and/or at least one suction device, and/or at least one blowing device.

10. The machine tool (1) according to any one of the preceding claims, **characterized in that** said locking means (9') are connected to said means (6, 7, 8).

11. The machine tool (1) according to claim 10, **characterized in that** said locking means (9') are connected to a top portion of said means (6, 7, 8).

12. The machine tool (1) according to any one of the preceding claims, **characterized in that** it comprises a bridge (21) arranged above said working plane (3) and movable according to said first preferential axis (X), said operating unit (22) being movable according to said third axis (Z) and being connected to said bridge (21) in a movable fashion according to said second axis (Y).
